# EUROPÄISCHE PATENTSCHRIFT

(11) **EP 2 796 674 B1**
(45) Veröffentlichungstag und Bekanntmachung des Hinweises auf die Patenterteilung: **02.05.2018**
(21) Anmeldenummer: 14161581.5
(22) Anmeldetag: 25.03.2014
(51) Int. Cl.: F01L 1/344, F16K 31/06

(54) **Zentralventil für einen Schwenkmotorversteller**
Central valve for a pivotable motor adjuster
Soupape central pour un moteur pivotant à l'ajustage

(30) Priorität: 22.04.2013 DE 102013104051; 22.04.2013 DE 102013104031
(43) Veröffentlichungstag der Anmeldung: 29.10.2014
(73) Patentinhaber: Hilite Germany GmbH, 97828 Marktheidenfeld (DE)
(72) Erfinder: Hutzelmann, Stefanie, 97782 Gräfendorf (DE); Kröpelin, Jan, 30926 Seelze (DE); Schulze, Dietmar, 35516 Münzenberg (DE)

(56) Entgegenhaltungen:
- EP-A1- 2 375 014
- DE-A1-102010 019 004
- DE-A1-102010 061 337
- US-A1- 2009 133 651
- US-A1- 2009 212 244

## Beschreibung

Die Erfindung geht aus von einem Zentralventil gemäß dem einteilig gefassten Patentanspruch 1.

Ein solches Zentralventil ist Teil eines Schwenkmotorverstellsystems, das einen Rotor enthält, der durch hydraulischen Druck an einem seiner beiden Arbeitsanschlüsse in jeweils eine seiner beiden Drehrichtungen verstellt werden kann.

Ständiges Ziel der Entwicklung von Schwenkmotorverstellsystemen ist einerseits eine möglichst geringe Belastung der hydraulischen Pumpe, da diese in der Regel alle hydraulischen Verbraucher eines Fahrzeugs versorgen muss, und andererseits eine möglichst rasche Verstellbarkeit. Um diese an sich gegenläufigen Anforderungen besser zu erfüllen, ist es bekannt, Druckspitzen bei der Nockenwellenverstellung über Rückschlagventile auszunutzen.

Bei dem aus der DE 10 2006 012 775 A1 bekannten Schwenkmotorverstellsystem sind die Druckkammern des Rotors mit Rückschlagventilen versehen, so dass Druckspitzen, wie sie bei einer raschen Verstellung auftreten, genutzt werden. Dabei wird ein Teil der Hydraulikflüssigkeit aus den der einen Drehrichtung zugeordneten Druckkammern dem Fluss von der Ölpumpe zugeführt, so dass ein größerer Volumenstrom für die anderen Druckkammern zur Verfügung steht.

Aus der EP 2 375 014 A1 ist es bekannt, Rückschlagventile zur Ausnutzung von Nockenwellenwechselmomenten in das Zentralventil zu integrieren, indem Bandrückschlagventile an der Innenseite des Gehäuserohrs angebracht werden. An den beiden Arbeitsanschlüssen und an dem Versorgungsanschluss des Gehäuserohrs drückt jeweils ein Bandrückschlagventil von innen gegen das Gehäuserohr. Wenn ausreichend hoher Druck an dem entsprechenden Anschluss anliegt, öffnet sich das Bandrückschlagventil, so dass an einem Arbeitsanschluss in das Zentralventil hineinströmende Hydraulikflüssigkeit zusammen mit Hydraulikfluid von dem Versorgungsanschluss dem anderen Arbeitsanschluss zugeführt werden kann. Ausgehend von einer Mittelstellung des Zentralventils ist zunächst eine Schaltstellung proportional ansteuerbar, in welcher die Druckspitzen des zu entlastenden Arbeitsanschlusses gegenüber dem zu belastenden Arbeitsanschluss gesperrt sind. Im Anschluss ist eine weitere Schaltstellung zur Nutzung der Nockenwellenwechselmomente ansteuerbar.

Aus der DE 10 2010 061 337 A1 ist ein Ventil für einen Schwenkmotorversteller bekannt, bei dem jeder Arbeitsanschluss A bzw. B in einen Arbeitsanschluss A* bzw. B* zur Nutzung von Nockenwellenwechselmomenten und einen Arbeitsanschluss A bzw. B zur direkten Durchleitung von Hydraulikfluid zu den Druckkammern des Schwenkmotorverstellers aufgetrennt ist. Die Arbeitsanschlüsse A* und B* zur Nutzung von Nockenwellenwechselmomenten weisen Rückschlagventile auf. In einer Mittelstellung des Kolbens sind diese beiden Arbeitsanschlüsse A* und B* mittels eines gemeinsamen Ringsteges blockiert. Durch das Blockieren des Ringsteges in der Mittelstellung wird die Regelqualität in der Mittelstellung verbessert.

Die EP 1 596 039 B1 betrifft ein Ventil zur Nutzung von Nockenwellenwechselmomenten. Dabei sind Rückschlagventile in Ringstegen eines Hohlkolbens vorgesehen. Die Verstellung erfolgt ausschließlich über Nockenwellenwechselmomente. Ein Tankabflussanschluss ist nicht vorgesehen.

Aufgabe der vorliegenden Erfindung ist, einen Weg aufzuzeigen, wie bei einem axial kurzen Zentralventil für einen Schwenkmotorversteller die Regelungsqualität in der Mittelstellung verbessert werden kann.

Diese Aufgabe wird durch ein Zentralventil mit den im Anspruch 1 angegebenen Merkmalen gelöst. Vorteilhafte Weiterbildungen der Erfindung sind Gegenstand von Unteransprüchen.

Bei einem erfindungsgemäßen Zentralventil sind in einer ersten Stellung des Kolbens der erste Arbeitsanschluss mit dem Versorgungsanschluss und der zweite Arbeitsanschluss mit dem Tankabflussanschluss verbunden. In einer zweiten Stellung - d.h. der Mittelstellung des Kolbens - sind der erste Arbeitsanschluss und der zweite Arbeitsanschluss bis auf Leckageströme abgesperrt. In einer dritten Stellung des Kolbens sind der zweite Arbeitsanschluss mit dem Versorgungsanschluss und der erste Arbeitsanschluss mit dem Tankabflussanschluss verbunden. Jeder Arbeitsanschluss kann also mit dem Tankabflussanschluss verbunden werden. Ein einziger Tankabflussanschluss genügt. Es können jedoch auch beidseitig des Zentralventils Tankabflussanschlüsse vorgesehen sein. Ein Tankabflussanschluss im Bereich des Motorgehäuseaustritts ist insbesondere dann von Vorteil, wenn der Schwenkmotorversteller ein Kettenversteller mit einer zu schmierenden Kette ist. Zahnriemenversteller sind hingegen außen von Hydraulikfluid - insbesondere Öl - frei zu halten.

Bei einem erfindungsgemäßen Zentralventil trägt der Kolben auf seiner Außenseite Rückschlagventile.

Das eine Rückschlagventil leitet Hydraulikfluid vom ersten Arbeitsanschluss dem Hydraulikstrom vom Versorgungsanschluss zu. Dort steht damit von dem Versorgungsanschluss ein erhöhter Volumenstrom für den zweiten Arbeitsanschluss zur Verfügung, wenn an dem ersten Arbeitsanschluss ein Druck anliegt, der einen Schwellenwert übersteigt, und sich der Kolben in seiner dritten Stellung befindet.

In analoger Weise sieht es bei einem weiteren Rückschlagventil aus. Dieses weitere Rückschlagventil leitet Hydraulikfluid vom ersten Arbeitsanschluss dem Hydraulikstrom vom Versorgungsanschluss zu. Dort steht damit von dem Versorgungsanschluss ein erhöhter Volumenstrom für den ersten Arbeitsanschluss zur Verfügung, wenn an dem zweiten Arbeitsanschluss ein Druck anliegt, der einen Schwellenwert übersteigt, und der Kolben in seiner ersten Stellung ist.

Die Rückschlagventile ermöglichen somit eine Nutzung von Nockenwellenwechselmomenten. Hydraulikfluid, das von einem Arbeitsanschluss in Richtung zu einem Tankabflussanschluss T fließt, wird dem mit Hydraulikfluid zu versorgendem anderen Arbeitsanschluss zugeführt. Somit kann eine rasche Verstellung des Schwenkmotorverstellers mit einer geringen Belastung der Hydraulikpumpe des Systems verbunden werden. Indem die Rückschlagventile außen auf dem Kolben sitzen, kann ein Strömungspfad von jeweils einem der beiden Arbeitsanschlüsse zu dem Tankabflussanschluss T verlaufen. Es ist keine Aufspaltung der Arbeitsanschlüsse A, B erforderlich ist. D.h. im Gegensatz zur DE 10 2006 012 775 A1 muss nicht jeder Arbeitsanschluss in einen Bohrung für die direkte Durchleitung zu der Druckkammer und eine Rückschlagventil-Bohrung für die Nutzung der Nockewellenwechselmomente aufgeteilt werden. Wenn eines der Rückschlagventile eines erfindungsgemäßen Zentralventils geöffnet ist, strömt Hydraulikfluid zwischen der Außenseite des Kolbens und der Innenseite des Gehäuserohrs von einem der beiden Arbeitsanschlüsse in den vom Versorgungsanschluss P kommenden Hydraulikfluidstrom ein.

In besonders vorteilhafter Weise benötigt das erfindungsgemäße Zentralventil somit keinen axialen Bauraums für separate Arbeitsanschlüsse A* und B* zur Nutzung von Nockenwellenwechselmomenten. Dabei ist der Kolben innerhalb des Gehäuserohrs axial verschiebbar. Das Gehäuserohr weist Radialausnehmungen auf. Diese Radialausnehmungen sind den Arbeitsanschlüssen A und B zugeordnet. In der Mittelstellung sind die beiden Radialausnehmungen von den Ringstegen zum Tankabflussanschluss T hin mit Überdeckungen verdeckt. Somit werden Druckspitzen über den Schwellenwerten von den Arbeitsanschlüssen A, B zu den Rückschlagventilen sehr stark über Leckagespalte gedrosselt. Das Hydraulikfluid fließt nicht durch die Rückschlagventile sondern es fließt zum Tankabflussanschluss T hin ab. Es kann in der Mittelstellung nicht zu Wechselwirkungen zwischen den Rückschlagventilen kommen, so dass auch keine Probleme mit der Regelqualität entstehen.

Auf der Außenseite des Kolbens sind jedem Arbeitsanschluss A bzw. B mehrere Rückschlagventile zugeordnet. Wenn an dem Arbeitsanschluss ein ausreichend hoher Druck anliegt, können mehrere Rückschlagventile vorteilhaft eine größere Menge Hydraulikflüssigkeit hindurch strömen lassen, so dass Druckspitzen noch besser ausgenutzt werden können. Mehrere erste Rückschlagventile sowie mehrere zweite Rückschlagventile können beispielsweise in Umfangsrichtung um den Kolben herum verteilt angeordnet sein.

Das erste und zweite Rückschlagventil bzw. die ersten und zweiten Rückschlagventile sind jeweils in einer Hülse angeordnet, welche den Kolben umgibt und an welcher der jeweilige Ringsteg ausgebildet ist. Auf diese Weise lässt sich das Zentralventil einfach zusammenbauen, nämlich indem eine oder mehrere Hülsen auf den Kolben aufgeschoben und so die Rückschlagventile außen an dem Kolben befestigt werden.

Die Anordnung der Rückschlagventile in verschiedenen Hülsen hat den Vorteil, dass dasselbe Bauteil in unterschiedlicher Orientierung auf den Kolben aufgesteckt werden kann, um erste und zweite Rückschlagventile an dem Kolben zu befestigen.

Der Kolben kann in einer besonders vorteilhaften Ausgestaltung als Hohlkolben ausgeführt sein. In diesem Fall kann dessen Innenraum problemlos dafür genutzt werden, um einen Strömungspfad von jeweils einem der beiden Arbeitsanschlüsse zu dem Tankabflussanschluss T zur Verfügung zu stellen. Zudem können Öffnungen des Gehäuserohrs, welche die Arbeitsanschlüsse bilden, in beiden Richtungen von Hydraulikflüssigkeit durchströmt werden. Im Gegensatz zur EP 2 375 014 A1 muss nicht jeder Arbeitsanschluss in einen Bohrung für die direkte Durchleitung zu der Druckkammer und eine Rückschlagventil-Bohrung für die Nutzung der Nockewellenwechselmomente aufgeteilt werden.

Weitere Einzelheiten und Vorteile der Erfindung werden an Ausführungsbeispielen unter Bezugnahme auf die beigefügten Zeichnungen beschrieben. Gleiche und einander entsprechende Bauteile sind darin mit übereinstimmenden Bezugszeichen versehen. Es zeigen:

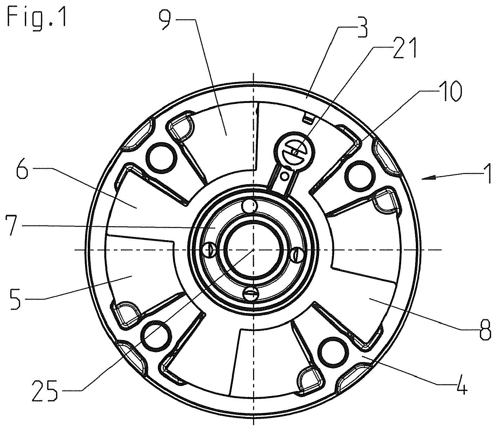

Fig. 1 in einer geschnittenen Darstellung einen Schwenkmotorversteller ohne zugehöriges Zentralventil,
Fig. 2 den Schwenkmotorversteller aus Fig. 1 in einer perspektivischen Ansicht von außen,
Fig. 3 einen Längsschnitt eines ersten Ausführungsbeispiel eines Zentralventils für einen Schwenkmotorversteller gemäß Fig. 1 und Fig. 2,
Fig. 4 einen Längsschnitt eines weiteren Ausführungsbeispiels eines Zentralventils,
Fig. 5 einen Längsschnitt des Zentralventils gemäß dem ersten Ausführungsbeispiel, wobei sich ein Hohlkolben in einer Mittelstellung befindet und
Fig. 6 ein Detail aus Fig. 5.

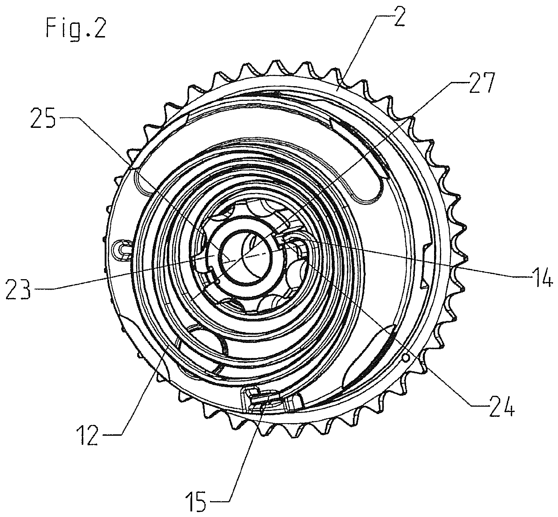

Mit einem Schwenkmotorversteller wird während des Betriebes eines Verbrennungsmotors die Winkellage an der Nockenwelle verändert. Durch Verdrehen der Nockenwelle werden die Öffnungs- und Schließzeitpunkte der Gaswechselventile so verschoben, dass der Verbrennungsmotor bei der jeweiligen Drehzahl seine optimale Leistung bringt. Der Schwenkmotorversteller ermöglicht dabei eine stufenlose Verstellung der Nockenwelle. Der Schwenkmotorversteller hat einen zylindrischen Stator 1, der drehfest mit einem in Fig. 2 ersichtlichen Zahnrad 2 verbunden ist. Im Ausführungsbeispiel ist das Zahnrad 2 ein Kettenrad, über das eine nicht näher dargestellte Kette geführt ist. Das Zahnrad 2 kann aber auch ein Zahnriemenrad sein, über das ein Antriebsriemen als Antriebselement geführt ist. Über dieses Antriebselement und das Zahnrad 2 ist der Stator 1 mit der Kurbelwelle in bekannter Weise antriebsverbunden.

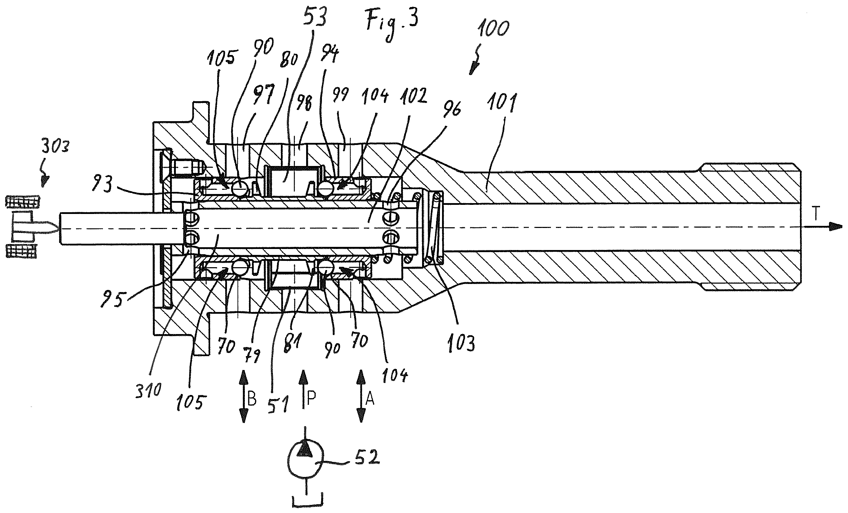

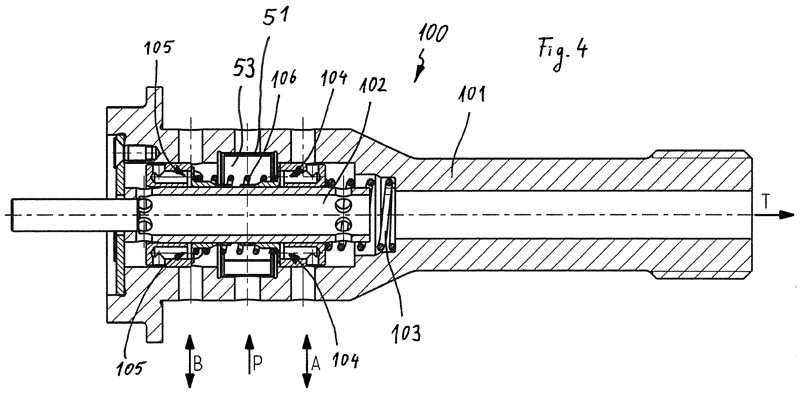

Der Stator 1 und das Zahnrad 2 können alternativ auch einstückig miteinander ausgebildet sein, wenn die andere Seite des Stators 1 öffenbar ist. Dabei können der Stator 1 und das Zahnrad 2 aus metallischem Werkstoff und/oder aus hartem Kunststoff bestehen. Als metallische Werkstoffe kommen u. a. Sintermetalle, Stahlbleche und Aluminium in Frage. Der Stator 1 umfasst einen zylindrischen Statorgrundkörper 3, an dessen Innenseite radial nach innen in gleichen Abständen Stege 4 abstehen. Zwischen benachbarten Stegen 4 werden Druckräume 5 gebildet, in die, über ein in Fig. 3 und Fig. 4 dargestelltes Zentralventil 100 gesteuert, Druckmedium eingebracht wird. Zwischen benachbarten Stegen 4 ragen Flügel 6, die radial nach außen von einem zylindrischen Rotorgrundkörper 7 eines Rotors 8 abstehen. Diese Flügel 6 unterteilen die Druckräume 5 zwischen den Stegen 4 jeweils in zwei Druckkammern 9 und 10.

Die Stege 4 liegen mit ihren Stirnseiten dichtend an der Außenmantelfläche des Rotorgrundkörpers 7 an. Die Flügel 6 ihrerseits liegen mit ihren Stirnseiten dichtend an der zylindrischen Innenwand des Statorgrundkörpers 3 an.

Der Rotor 8 ist drehfest mit der nicht näher dargestellten Nockenwelle verbunden. Um die Winkellage zwischen der Nockenwelle zu verändern, wird der Rotor 8 relativ zum Stator 1 gedreht. Hierzu wird je nach gewünschter Drehrichtung das Druckmedium in den Druckkammern 9 oder 10 unter Druck gesetzt, während die jeweils anderen Druckkammern 10 oder 9 zum Tank hin entlastet werden.

Gemäß Fig. 2 weist der Schwenkmotorversteller eine Spiralfeder 12 auf, mit welcher der Rotor 8 gegen den Stator 1 zur Kompensation eines Reibmomentes an der Nockenwelle in die eine Drehrichtung verspannt ist. Die Spiralfeder 12 weist mehrere Windungen 27 auf. Die Spiralfeder 12 ist mit ihrem inneren Ende 14 drehfest in einer Ausnehmung 24 an einer Nabe 23 des Rotors 8 aufgenommen. Die Spiralfeder 12 ist mit ihrem äußeren Ende 15 drehfest am Stator 1 befestigt. Innerhalb der Nabe 23 ist eine zentrale Bohrung 25 vorgesehen, in die ein Zentralventil 100 eingesteckt und mit der Nockenwelle verschraubt ist.

Fig. 3 zeigt dieses Zentralventil 100 für den Schwenkmotorversteller in einem Längsschnitt. Das Zentralventil 100 hat ein Gehäuserohr 101, das in axialem Abstand voneinander angeordnete Radialausnehmungen 97, 98, 99 aufweist, die einen ersten Arbeitsanschluss A, einen Versorgungsanschluss P und einen zweiten Arbeitsanschluss B bilden. Der Versorgungsanschluss P ist bevorzugt zwischen den beiden Arbeitsanschlüssen A, B angeordnet. Bei dem dargestellten Ausführungsbeispiel hat das Gehäuserohr 101 an einer Stirnseite einen Tankabflussanschluss T. Der Tankabflussanschluss T kann aber auch als ein radialer Anschluss ausgebildet sein. Bei dem gezeigten Ausführungsbeispiel hat das Gehäuserohr 101 nur drei radiale Anschlüsse, nämlich zwei Arbeitsanschlüsse A, B und einen Versorgungsanschluss P. Alle Radialausnehmungen 97, 98, 99 des Gehäuserohrs 101 haben deshalb einen von drei Abständen von einem ersten Ende des Gehäuserohrs 101. Separate Arbeitsanschlüsse für die Nutzung von Nockenwellenwechselmomenten sind nicht vorgesehen.

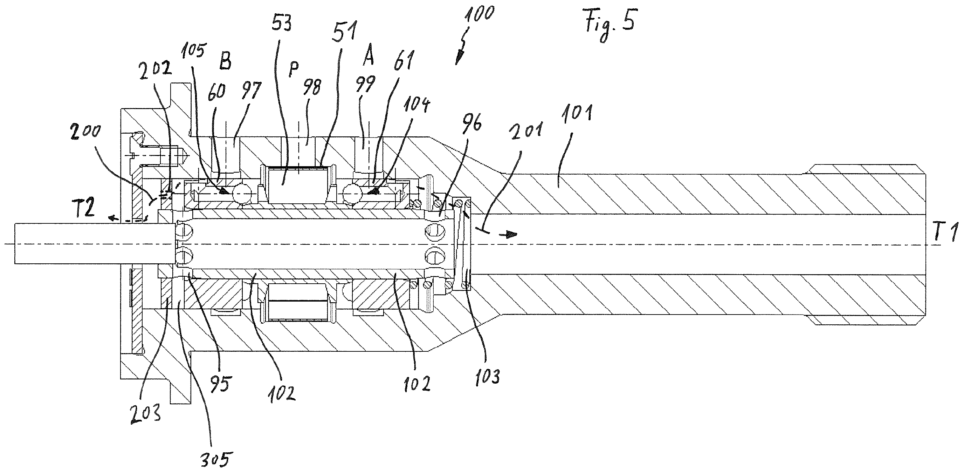

In dem Gehäuserohr 101 ist ein Hohlkolben 102 angeordnet, der in Längsrichtung relativ zu dem Gehäuserohr 101 gegen die Rückstellkraft einer Rückstellfeder 103 beweglich ist und radiale Öffnungen 95, 96 aufweist. In einer zeichnerisch nicht dargestellten ersten Stellung des Hohlkolbens 102 ist der erste Arbeitsanschluss A mit dem Versorgungsanschluss P verbunden und gleichzeitig der zweite Arbeitsanschluss B mit dem Tankabflussanschluss T verbunden. Hingegen sind in einer zweiten Stellung des Hohlkolbens 102 der erste Arbeitsanschluss A und der zweite Arbeitsanschluss B abgesperrt. Diese Absperrung beinhaltet jedoch geringe Leckageverluste. Bei dieser zweiten Stellung handelt es sich um die in Fig. 5 dargestellte Mittelstellung. In einer in der Zeichnung Fig. 3 dargestellten dritten Stellung des Hohlkolbens 102 ist der zweite Arbeitsanschluss B mit dem Versorgungsanschluss P verbunden und gleichzeitig der erste Arbeitsanschluss A mit dem Tankabflussanschluss T verbunden.

Stromabwärts des Versorgungsanschlusses P ist ein Pumpenrückschlagventil 51 angeordnet. Dem Pumpenrückschlagventil 51 folgt stromabwärts ein Innenraum 53. Dieser Innenraum 53 liegt im Strömungsweg zwischen den beiden Arbeitsanschlüssen A, B.

Der Hohlkolben 102 trägt auf seiner Außenseite mehrere Rückschlagventile 104, 105. Eine Hälfte dieser Rückschlagventile, die im Folgenden als erste Rückschlagventile 104 bezeichnet werden, öffnen eine Verbindung zwischen dem ersten Arbeitsanschluss A und dem Innenraum 53 dem Hydraulikfluid von dem Versorgungsanschluss P bzw. der Ölpumpe 52 zugeführt wird. Damit kann über den Innenraum 53 auch zwischen den beiden Arbeitsanschlüssen A, B Hydraulikfluid fließen, wenn der Hohlkolben 102 in seiner dritten Stellung ist und an dem Arbeitsanschluss A ein Druck anliegt, der einen Schwellenwert übersteigt. Die andere Hälfte der Rückschlagventile, die im Folgenden als zweite Rückschlagventile 105 bezeichnet werden, öffnen eine Verbindung zwischen dem zweiten Arbeitsanschluss B und dem Versorgungsanschluss P. Damit kann über den Versorgungsanschluss P auch zwischen den beiden Arbeitsanschlüssen A, B Hydraulikfluid fließen, wenn der Hohlkolben 102 in seiner ersten Stellung ist und an dem zweiten Arbeitsanschluss B ein Druck anliegt, der einen Schwellenwert übersteigt. Wenn sich der Hohlkolben 102 in seiner ersten oder in seiner dritten Stellung befindet, können die Rückschlagventile 104, 105 also einen Strömungsweg öffnen, auf dem Hydraulikfluid zwischen der Außenseite des Hohlkolbens 102 und der Innenseite des Gehäuserohrs 101 von einem der beiden Arbeitsanschlüsse A bzw. B zu dem Innenraum 53 strömt. Damit steht das Hydraulikfluid dem anderen Arbeitsanschluss B bzw. A bei erhöhtem Volumenstrombedarf zur Verfügung.

In einem Schwenkmotorverstellsystem sind zum Verstellen des Rotors 8 dessen erste Druckkammern 9 über einen der beiden Arbeitsanschlüsse A bzw. B an den Versorgungsanschluss P angeschlossen, während gleichzeitig zweite Druckkammern 10 des Rotors 8 über den anderen Arbeitsanschluss B bzw. A an den Tankabflussanschluss T angeschlossen sind. Bei Rotorverstellung liegt hydraulischer Druck an dem Arbeitsanschluss an, der mit dem Tankabflussanschluss T verbunden ist. Dieser hydraulische Druck ist umso größer, je rascher die Verstellung stattfindet. Die Rückschlagventile 104, 105 des dargestellten Zentralventils 100 öffnen sich, wenn ein solcher Druck einen Schwellenwert übersteigt und ermöglichen so eine Nutzung dieser Druckspitzen. Das Zentralventil 100 ermöglicht deshalb eine schnellere Verstellung bei einer geringeren Belastung der Hydraulikpumpe des Schwenkmotorverstellsystems.

Die ersten Rückschlagventile 104 können in einer Hülse 94 angeordnet sein, die an dem Hohlkolben 102 befestigt ist. Die Rückstellfeder 103 kann sich mit einem Ende an dieser Hülse 94 abstützen. Das andere Ende der Rückstellfeder 103 kann sich an einer Innenfläche des Gehäuserohrs 101 abstützen. Die Hülse 94 kann in der zweiten Stellung des Hohlkolbens 102 die Radialausnehmung 99 verschließen, so dass der Hydraulikstrom vom und zum ersten Arbeitsanschluss A bis auf einen Leckagestrom blockiert ist.

Die Hülse 94 kann beispielsweise auf den Hohlkolben 102 aufgepresst sein. Eine andere Möglichkeit für eine starre Verbindung zwischen der Hülse 94 und dem Hohlkolben 102 ist eine Schweißverbindung. Die zweiten Rückschlagventile 105 können in derselben Hülse 94 angeordnet sein oder in einer zweiten Hülse 93, die ebenfalls auf den Hohlkolben 102 aufgeschoben ist.

Die Hülse 93 mit den zweiten Rückschlagventilen 105 kann in der zweiten Stellung des Hohlkolbens 102 die Radialausnehmung 97 verschließen, so dass der Hydraulikstrom vom und zum ersten Arbeitsanschluss B bis auf einen Leckagestrom blockiert ist.

Die Rückschlagventile 104, 105 können beispielsweise Kugelventile sein, also einen Schließkörper 90 in Form einer Kugel aufweisen. Die Schließkörper 90 der ersten und zweiten Rückschlagventile 104, 105 sind jeweils in Längsrichtung des Hohlkolbens 102 relativ zu dem Hohlkolben 102 beweglich. Die ersten Rückschlagventile 104 und die zweiten Rückschlagventile 105 sind dabei entgegengesetzt orientiert.

Die radialen Öffnungen 95, 96 des Hohlkolbens 102, durch die Hydraulikflüssigkeit hindurch treten kann, befinden sich jeweils in einem Endabschnitt des Hohlkolbens 102. Die ersten Rückschlagventile 104 und die zweiten Rückschlagventile 105 sind an der Außenseite eines mittleren Abschnitts des Hohlkolbens 102 befestigt, der keine radialen Öffnungen aufweist.

Die Schließkörper 90 kommen in diesem Ausführungsbeispiel ohne Federn aus. Der jeweilige Schließkörper 90 ist also in Grenzen zwischen einem Ventilsitz 70 und einem Wegbegrenzer 80 bzw. 81 frei beweglich. Dabei sorgt der vom Versorgungsanschluss P kommende Innendruck dafür, dass die Rückschlagventile 104, 105 geschlossen sind. Die Rückschlagventile 104, 105 weisen in der axial zum Versorgungsanschluss P weisenden Richtung Wegbegrenzer 80, 81 auf. Diese Wegbegrenzer 80, 81 verhindern, dass die Schließkörper 90 axial soweit auf den Versorgungsanschluss P strömen, dass die Zeit zum Schließen des Rückschlagventils 104 bzw. 105 zu lange dauern würde. Die Wegbegrenzer 80, 81 erstrecken sich von dem Hohlkolben 102 radial nach außen. Die Wegbegrenzer 80, 81 sind an einer Begrenzerhülse 79 angeordnet, die mittig zwischen den beiden Rückschlagventilen 104, 105 auf den Hohlkolben 102 gesteckt ist.

Fig. 4 zeigt ein weiteres Ausführungsbeispiel eines Zentralventils 100 für einen Schwenkmotorversteller. Dieses Ausführungsbeispiel unterscheidet sich von dem Ausführungsbeispiel der Fig. 3 unter anderem dadurch, dass die Rückschlagventile keine Kugelventile sind. Die ersten Rückschlagventile 104 haben bei diesem Ausführungsbeispiel einen gemeinsamen ringförmigen Schließkörper. Dieser Schließkörper ist in Längsrichtung des Hohlkolbens 102 gegen die Kraft einer Druckfeder 106 beweglich, die mit einem Ende gegen den Schließkörper drückt. Das andere Ende der Druckfeder 106 drückt gegen einen gleich ausgebildeten Schließkörper der zweiten Rückstellventile 105.

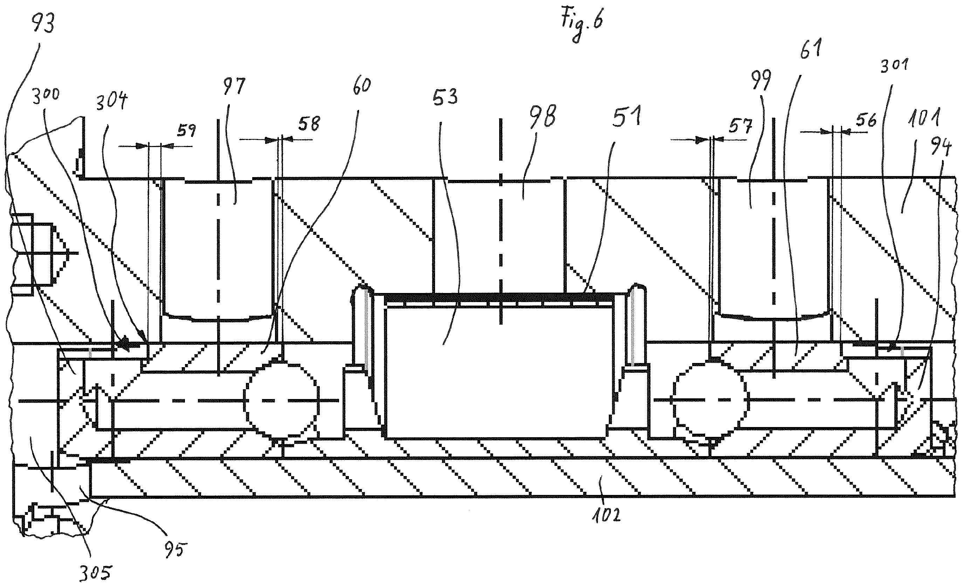

Fig. 5 und das Detail Fig. 6 zeigen für das erste Ausführungsbeispiel - d.h. für Fig. 3 - den Hohlkolben 102 in der zweiten Stellung. Diese zweite Stellung des Hohlkolbens 102 ist eine Mittelstellung. In dieser Mittelstellung sind der erste Arbeitsanschluss A und der zweite Arbeitsanschluss B abgesperrt. Dabei decken die beiden Ringstege 60, 61 die Radialausnehmungen 97, 99 mit Überdeckungen 59, 58, 57, 56 ab. Die Überdeckungen 59, 56 zum Tankabflussanschluss T hin sind größer als die Überdeckungen 58, 57 zu dem Versorgungsanschluss P hin. Im Beispiel sind die Überdeckungen 59, 56 zum Tankabflussanschluss T hin doppelt so groß, wie die Überdeckungen 58, 57 zu dem Versorgungsanschluss P hin. Dabei betragen die Überdeckungen 59, 56 zum Tankabflussanschluss T hin ca. 2/10mm. Hingegen betragen die Überdeckungen 58, 57 zu dem Versorgungsanschluss P hin 1/10mm. Da der Hohlkolben 102 axialverschieblich gegenüber dem Gehäuserohr 101 ist, ist dort zwangsläufig ein Radialspiel vorhanden. Somit sind auch Spalte an den Überdeckungen 59, 58, 57, 56, die einen stark gedrosselten Fluss von Hydraulikfluid ermöglichen. Dabei nimmt die Drosselung an den Spalten mit der Länge der Überdeckung - d.h. der Spaltlänge - zu. Die Überdeckungen 59, 56 zum Tankabflussanschluss T hin sind dabei so groß, dass dort die Drosselung sehr stark ist. Die geringe Menge Hydraulikfluid, die bei Druckstößen in den Druckkammern an den Überdeckungen 59, 56 durch die langen Spalte fließt, fließt zum Tankabflussanschluss T und kann nicht das Rückschlagventil 104 bzw. 105 von hinten öffnen. Die Strömungswiderstände zum Tankabfluss sind nämlich bei derart geringen Volumenströmen sehr gering. Damit kann es bei wechselweisen Druckstößen infolge von Nockenwellenwechselmomenten in der Mittelstellung nicht zu Regelproblemen kommen.

Da die Spaltlängen zu dem Versorgungsanschluss P relativ kurz sind, werden auch beide Arbeitsanschlüsse A, B vom Versorgungsanschluss P mit gedrosseltem hydraulischem Druck versorgt. Damit ist dann der Rotor 8 gegenüber dem Stator 1 hydraulisch verspannt. Zur hydraulischen Verspannung in der Mittelstellung wird damit das Zentralventil hinsichtlich der Strömungsverhältnisse entsprechend der DE 198 23 619 A1 ausgeführt.

Fig. 5 zeigt mit gestrichelten Linien eine alternative Ausführungsform. Dabei sind Hydraulikflüsse 200, 201 dargestellt. Diese Ausführungsform macht insbesondere dann Sinn, wenn auf die radialen Öffnungen 95, 96 verzichtet wird. Dann kann der Innenraum des Hohlkolbens 102 entweder für eine andere Ölleitungsfunktion verwendet werden. Anstelle des Hohlkolbens 102 ist alternativ ein Kolben aus Vollmaterial vorgesehen. Vom ersten Arbeitsanschluss A zum ersten Tankabflussanschluss T1 erfolgt der Hydraulikfluss 201 außen am Hohlkolben 102 bzw. Kolben entlang. Vom zweiten Arbeitsanschluss B zum zweiten Tankabflussanschluss T2 erfolgt der Hydraulikfluss 200 außen am Hohlkolben 102 bzw. Kolben entlang. Dabei ist entweder ein Loch 202 in der Scheibe 203 vorgesehen, oder auf die Scheibe 203 wird verzichtet. Ein zweiter Tankabflussanschluss T2 nach außen hin ist insbesondere dann sinnvoll, wenn eine Kette zum Antrieb des Schwenkmotorverstellers verwendet wird, die mit Hydraulikfluid bzw. Öl zu schmieren ist.

In weiteren Ausführungsformen wird entweder nur auf die einen radialen Öffnungen 95 oder nur auf die anderen radialen Öffnungen verzichtet.

In sämtlichen Ausführungsbeispielen sind Drosselstellen 300, 301 ersichtlich, die im Folgenden anhand der Fig. 3 und der Fig. 6 erläutert werden und auch Gegenstand der nicht vorveröffentlichten DE 10 2012 111 033.6 sind. Mit einer derartigen Drosselstelle 300 bzw. 301 wird eine hohe Regelqualität beim Schwenkmotornockenwellenversteller erreicht.

Es ist ein in Fig. 3 ersichtlicher elektromagnetischer Aktor 303 zur Betätigung des Hohlkolbens 102 vorgesehen. Dabei wird bei Rücknahme des Stromes am elektromagnetischen Aktor 303 bereits relativ frühzeitig begonnen, das Hydraulikfluid aus der Druckkammer zum Tankabflussanschluss T auszuleiten. Überdies verläuft die Kennlinie, welche den Volumenstrom dieser Ausleitung über der Stromstärke darstellt, relativ linear.

Wie in Fig. 6 ersichtlich ist, weist der Ringsteg 60 eine dem elektromagnetischen Aktor 303 zugewandte Steuerkante 304 auf. Damit bildet sich ein Raum 305 innerhalb des Gehäuserohrs 101, der einerseits von der Hülse 93 am Hohlkolben 102 und andererseits von der Scheibe 203 begrenzt ist. Das Hydraulikfluid kann aus diesem Raum 305 über die radiale Öffnung 95 oder alternativ dem Loch 202 zu dem Tankabfluss T herausgeführt werden.

Wäre die Drosselstelle 300 jedoch nicht vorhanden, so könnte der Schwenkmotornockenwellenversteller jedoch - beispielsweise infolge von Nockenwellenwechselmomenten - bestrebt sein, mehr Hydraulikfluid in den Raum 305 zu drücken, als aus dem Raum 305 durch die radiale Öffnung 95 oder dem Loch 202 herausgedrückt werden kann. Dann könnte bei schneller Senkung der Stromstärke am Elektromagneten der Hohlkolben 102 zunächst nicht gegen den vom ersten Arbeitsanschluss A unter einem relativ hohen Druck stehenden Raum 305 verschoben werden. D.h. der Hohlkolben 102 könnte nicht dem elektromagnetischen Aktor 303 folgen und eine Lücke würde sich dort öffnen. Mangels der Verschiebung des Hohlkolbens 102 könnte sich der Strömungsquerschnitt an den Arbeitsanschlüssen A, B auch nicht ändern. Aus diesem Grunde ist die Drosselstelle 300 zwischen dem ersten Arbeitsanschluss A und dem Raum 305 vorgesehen. Infolge des damit nur im geringen Maße vom Arbeitsanschluss A nachgeführten Hydraulikfluids kann sich der Raum 305 schneller über die Öffnung 95 oder das Loch 202 entlasten und die Ausleitung zum Tankabflussanschluss T erfolgt früher. Die Kennlinie, welche den Durchfluss dieser Ausleitung über dem Strom darstellt, verläuft damit linearer, als ohne die Drosselstelle 300. Damit ist eine genaue Regelung ermöglicht.

Damit ist an der Hülse 93 auf deren von der anderen Hülse 94 abgewandten Seite die Steuerkante 304 vorgesehen. Der Raum 305 ist innerhalb des Gehäuserohrs 101 einerseits von der einen Hülse 93 und andererseits von der zum Gehäuserohr festen Scheibe 202 begrenzt. Vom Raum 305 geht die radiale Öffnung 95 bzw. das Loch 202 ab. Diese Öffnung 95 bzw. das Loch 202 verbindet den Raum 305 mit einem zu einem Tankablaufanschluss T führenden Ablaufkanal 310 hydraulisch. Zwischen der Steuerkante 304 und dem Raum 305 ist die Drosselstelle 300 vorgesehen.

Die gleiche Situation stellt sich an der Drosselstelle 301 dar. Jedoch ist der Effekt geringer.

## Patentansprüche

1. Zentralventil für einen Schwenkmotorversteller mit einem Gehäuserohr (101), das einen ersten Arbeitsanschluss (A), einen Versorgungsanschluss (P), einen zweiten Arbeitsanschluss (B) und einen Tankabflussanschluss (T) aufweist,
wobei jedem der beiden Arbeitsanschlüsse (A, B) eine Radialausnehmung (97 bzw. 99) zugehörig ist, die von einem Ringsteg (60, 61) eines Kolbens (102) verdeckbar ist, der innerhalb des Gehäuserohrs (101) axial verschiebbar zu diesem angeordnet ist,
wobei in einer ersten Stellung des Hohlkolbens (102) der erste Arbeitsanschluss (A) mit dem Versorgungsanschluss (P) verbunden ist, indem der eine Ringsteg (61) die eine Radialausnehmung (99) zum Versorgungsanschluss (P) frei gibt,
wobei in dieser ersten Stellung der zweite Arbeitsanschluss (B) von dem anderen Ringsteg (60) zum Tankabflussanschluss (T) freigegeben ist,
wobei in einer zweiten Stellung des Kolbens (102) dieser in einer Mittelstellung positioniert ist,
wobei in einer dritten Stellung des Hohlkolbens (102) der zweite Arbeitsanschluss (B) mit dem Versorgungsanschluss (P) verbunden ist, indem der andere Ringsteg (60) die andere Radialausnehmung (97) zum Versorgungsanschluss (P) frei gibt,
wobei in dieser dritten Stellung der erste Arbeitsanschluss (A) von dem einen Ringsteg (61) zum Tankabflussanschluss (T) freigegeben ist,
wobei der Kolben (102) auf seiner Außenseite ein oder mehrere erste Rückschlagventile (104) trägt, die einen Strömungsweg von dem ersten Arbeitsanschluss (A) zum zweiten Arbeitsanschluss (B) öffnen, wenn der Kolben (102) in seiner dritten Stellung ist und an dem ersten Arbeitsanschluss (A) ein Druck anliegt, der einen Schwellenwert übersteigt, und der Kolben (102) auf seiner Außenseite ein oder mehrere zweite Rückschlagventile (105) trägt, die einen Strömungsweg von dem zweiten Arbeitsanschluss (B) zu dem ersten Arbeitsanschluss (A) öffnen, wenn der Kolben (102) in seiner ersten Stellung ist und an dem zweiten Arbeitsanschluss (B) ein Druck anliegt, der einen Schwellenwert übersteigt,
wobei in der Mittelstellung beide Radialausnehmungen (97, 99) von den Ringstegen (60, 61) zum Tankabflussanschluss (T) hin mit Überdeckungen (59, 56) verdeckt sind, so dass Druckspitzen über den Schwellenwerten von den Arbeitsanschlüssen (A, B) zu den Rückschlagventilen (104, 105) stark gedrosselt sind, **dadurch gekennzeichnet, dass** das erste und zweite Rückschlagventil (104, 105) bzw. die ersten oder zweiten Rückschlagventile (104, 105) jeweils in einer Hülse (93, 94) angeordnet sind, welche den Kolben (102) umgibt und an welcher der jeweilige Ringsteg (60, 61) ausgebildet ist.

2. Zentralventil nach Anspruch 1, **dadurch gekennzeichnet, dass** der Kolben ein Hohlkolben (102) ist.

3. Zentralventil nach Anspruch 2, **dadurch gekennzeichnet, dass** der Hohlkolben (102) radiale Öffnungen (95, 96) für den Tankabflussanschluss (T) aufweist.

4. Zentralventil nach einem der vorhergehenden Patentansprüche, **dadurch gekennzeichnet, dass** in der Mittelstellung beide Radialausnehmungen (97, 99) von den Ringstegen (60, 61) zum Versorgungsanschluss (P) hin mit Überdeckungen (58, 57) verdeckt sind, so dass ein Rotor (8) des Schwenkmotorverstellers gegenüber dem Stator (1) des Schwenkmotorverstellers hydraulisch verspannt ist.

5. Zentralventil nach einem der vorhergehenden Patentansprüche, **dadurch gekennzeichnet, dass** das stromabwärts des Versorgungsanschlusses (P) ein Pumpenrückschlagventil (51) angeordnet ist, welchem stromabwärts ein Innenraum (53) folgt, welcher im Strömungsweg zwischen den beiden Arbeitsanschlüssen (A, B) liegt.

6. Zentralventil nach Patentanspruch 1, **dadurch gekennzeichnet, dass** zumindest an einer der beiden Hülsen (93 bzw. 94) auf deren von der anderen Hülse (94 bzw. 93) abgewandten Seite eine Steuerkante (304) vorgesehen ist, wobei ein Raum (305) innerhalb des Gehäuserohrs (101) einerseits von der einen Hülse (93 bzw. 94) und andererseits von einem zum Gehäuserohr (101) festen Teil (202) begrenzt ist, wobei vom Raum (305) eine radiale Öffnung (95 bzw. 202) abgeht, die den Raum (305) mit einem zu einem Tankablaufanschluss (T) führenden Ablaufkanal hydraulisch verbindet, wobei zwischen der Steuerkante (304) und dem Raum (305) eine Drosselstelle (300) vorgesehen ist.

7. Zentralventil nach einem der vorhergehenden Patentansprüche, **dadurch gekennzeichnet, dass** die Rückschlagventile (104, 105) als Kugelrückschlagventile ausgeführt sind.

## Claims

1. Central valve for a pivoting motor adjuster, comprising a housing tube (101) which has a first working port (A), a supply port (P), a second working port (B) and a tank outlet port (T), wherein each of the two working ports (A, B) is assigned a radial recess (97 or 99) which is able to be covered by a ring-shaped web (60, 61) of a piston (102) which is arranged inside the housing tube (101) so as to be axially displaceable in relation thereto,
wherein in a first position of the hollow piston (102), the first working port (A) is connected to the supply port (P) in that the one ring-shaped web (61) opens up to the supply port (P) the one radial recess (99),
wherein in said first position, the second working port (B) is opened up to the tank outlet port (T) by the other ring-shaped web (60),
wherein in a second position of the piston (102), said piston is positioned in a middle position, wherein in a third position of the hollow piston (102), the second working port (B) is connected to the supply port (P) in that the other ring-shaped web (60) opens up to the supply port (P) the other radial recess (97),
wherein in said third position, the first working port (A) is opened up to the tank outlet port (T) by the one ring-shaped web (61),
wherein, on its outer side, the piston (102) bears one or more first check valves (104) which open a flow path from the first working port (A) to the second working port (B) whenever the piston (102) is in its third position and a pressure which exceeds a threshold value prevails at the first working port (A), and, on its outer side, the piston (102) bears one or more second check valves (105) which open a flow path from the second working port (B) to the first working port (A) whenever the piston (102) is in its first position and a pressure which exceeds a threshold value prevails at the second working port (B),
wherein in the middle position, both radial recesses (97, 99) are covered with covers (59, 56) towards the tank outlet port (T) by the ring-shaped webs (60, 61), with the result that pressure peaks above the threshold values are intensely throttled from the working ports (A, B) to the check valves (104, 105),
**characterized in that**
the first and second check valve (104, 105) or the first or second check valves (105) are arranged in each case in a sleeve (93, 94) which surrounds the piston (102) and on which the respective ring-shaped web (60, 61) is formed.

2. Central valve according to Claim 1, **characterized in that** the piston is a hollow piston (102).

3. Central valve according to Claim 2, **characterized in that** the hollow piston (102) has radial openings (95, 96) for the tank outlet port (T).

4. Central valve according to one of the preceding patent claims, **characterized in that**, in the middle position, both radial recesses (97, 99) are covered with covers (58, 57) towards the supply port (P) by the ring-shaped webs (60, 61), with the result that a rotor (8) of the pivoting motor adjuster is hydraulically clamped with respect to the stator (1) of the pivoting motor adjuster.

5. Central valve according to one of the preceding patent claims, **characterized in that** a pump check valve (51) is arranged downstream of the supply port (P) and is followed downstream by an inner space (53) which is situated in the flow path between the two working ports (A, B).

6. Central valve according to Patent Claim 1, **characterized in that** a control edge (304) is provided at least on one of the two sleeves (93 or 94) on the side thereof which is averted from the other sleeve (94 or 93), wherein a space (305) inside the housing tube (101) is delimited at one side by the one sleeve (93 or 94) and at the other side by a part (202) which is fixed in relation to the housing tube (101), wherein a radial opening (95 or 202) which hydraulically connects the space (305) to an outflow duct which leads to a tank outlet port (T) runs off from the space (305), wherein a throttling point (300) is provided between the control edge (304) and the space (305) .

7. Central valve according to one of the preceding patent claims, **characterized in that** the check valves (104, 105) are designed as ball check valves.

## Revendications

1. Soupape centrale pour un organe de réglage de moteur pivotant, comprenant un tube de boîtier (101), qui présente un premier raccord de travail (A), un raccord d'alimentation (P), un deuxième raccord de travail (B) et un raccord d'écoulement de réservoir (T),
dans laquelle chacun des deux raccords de travail (A, B) présente un évidement radial (97, respectivement 99) qui peut être recouvert par une nervure annulaire (60, 61) d'un piston (102) qui est disposé à l'intérieur du tube de boîtier (101) de manière déplaçable axialement par rapport à celui-ci,
dans laquelle, dans une première position du piston creux (102), le premier raccord de travail (A) est relié au raccord d'alimentation (P) par le fait que l'une des nervures annulaires (61) libère un évidement radial (99) vers le raccord d'alimentation (P),
dans laquelle, dans cette première position, le deuxième raccord de travail (B) est libéré par l'autre nervure annulaire (60) vers le raccord d'écoulement de réservoir (T),
dans laquelle, dans une deuxième position du piston (102), celui-ci est positionné dans une position centrale,
dans laquelle, dans une troisième position du piston creux (102), le deuxième raccord de travail (B) est connecté au raccord d'alimentation (P), par le fait que l'autre nervure annulaire (60) libère l'autre évidement radial (97) vers le raccord d'alimentation (P),
dans laquelle, dans cette troisième position, le premier raccord de travail (A) est libéré par l'une des nervures annulaires (61) vers le raccord d'écoulement de réservoir (T),
dans laquelle le piston (102) porte, sur son côté extérieur, une ou plusieurs premières soupapes de non-retour (104), qui ouvrent une voie d'écoulement depuis le premier raccord de travail (A) jusqu'au deuxième raccord de travail (B) lorsque le piston (102) est dans sa troisième position et qu'une pression s'applique au premier raccord de travail (A), laquelle dépasse une valeur seuil, et le piston (102) porte, sur son côté extérieur, une ou plusieurs deuxièmes soupapes de non-retour (105) qui ouvrent une voie d'écoulement depuis le deuxième raccord de travail (B) jusqu'au premier raccord de travail (A) lorsque le piston (102) est dans sa première position et qu'une pression s'applique au deuxième raccord de travail (B), laquelle dépasse une valeur seuil,
dans laquelle, dans la position centrale, les deux évidements radiaux (97, 99) sont recouverts par les nervures annulaires (60, 61) vers le raccord d'écoulement de réservoir (T) avec des recouvrements (59, 56) de telle sorte que des pointes de pression au-delà des valeurs seuil depuis les raccords de travail (A, B) jusqu'aux soupapes de non-retour (104, 105) soient fortement étranglées,
**caractérisée en ce que**
la première et la deuxième soupape de non-retour (104, 105) ou les premières ou deuxièmes soupapes de non-retour (104, 105) sont disposées à chaque fois dans une douille (93, 94), qui entoure le piston (102) et au niveau de laquelle est réalisée la nervure annulaire respective (60, 61).

2. Soupape centrale selon la revendication 1, **caractérisée en ce que** le piston est un piston creux (102).

3. Soupape centrale selon la revendication 2, **caractérisée en ce que** le piston creux (102) présente des ouvertures radiales (95, 96) pour le raccord d'écoulement de réservoir (T).

4. Soupape centrale selon l'une quelconque des revendications précédentes, **caractérisée en ce que** dans la position centrale, les deux évidements radiaux (97, 99) sont recouverts par des recouvrements (58, 57) depuis les nervures annulaires (60, 61) vers le raccord d'alimentation (P) de telle sorte qu'un rotor (8) de l'organe de réglage de moteur pivotant soit serré de manière hydraulique par rapport au stator (1) de l'organe de réglage de moteur pivotant.

5. Soupape centrale selon l'une quelconque des revendications précédentes, **caractérisée en ce qu'**une soupape de non-retour de pompe (51) est disposée en aval du raccord d'alimentation (P), laquelle est suivie d'un espace interne (53) en aval, lequel est situé dans la voie d'écoulement entre les deux raccords de travail (A, B).

6. Soupape centrale selon la revendication 1, **caractérisée en ce qu'**au moins au niveau de l'une des deux douilles (93, respectivement 94), sur son côté opposé à l'autre douille (94, respectivement 93), est prévue une arête de commande (304), un espace (305) étant délimité à l'intérieur du tube de boîtier (101) d'une part par l'une des douilles (93, respectivement 94) et d'autre part par une pièce (202) fixée au tube de boîtier (101), une ouverture radiale (95, respectivement 202) partant de l'espace (305), laquelle relie hydrauliquement l'espace (305) à un canal d'écoulement conduisant à un raccord d'écoulement de réservoir (T), un point d'étranglement (300) étant prévu entre l'arête de commande (304) et l'espace (305).

7. Soupape centrale selon l'une quelconque des revendications précédentes, **caractérisée en ce que** les soupapes de non-retour (104, 105) sont réalisées sous forme de soupapes de non-retour sphériques.
